# EUROPÄISCHE PATENTSCHRIFT

(11) **EP 1 335 843 B1**
(45) Veröffentlichungstag und Bekanntmachung des Hinweises auf die Patenterteilung: **02.01.2008**
(21) Anmeldenummer: 01982463.0
(22) Anmeldetag: 06.11.2001
(51) Int. Cl.: B60Q 1/04, B60Q 1/52, G01S 7/499

(54) **EINRICHTUNG ZUR FAHRZEUGBELEUCHTUNG**
DEVICE FOR VEHICLE LIGHTING
DISPOSITIF POUR L'ECLAIRAGE DE VEHICULES

(30) Priorität: 09.11.2000 DE 10055462
(43) Veröffentlichungstag der Anmeldung: 20.08.2003
(73) Patentinhaber: Daimler AG, 70327 Stuttgart (DE)
(72) Erfinder: WEIDEL, Edgar, 89250 Senden (DE)
(86) Internationale Anmeldenummer: PCT/EP2001/012810
(87) Internationale Veröffentlichungsnummer: WO 2002/038413

(56) Entgegenhaltungen:
- DE-A- 4 107 850
- GB-A- 302 656
- US-A- 5 582 480
- US-A- 5 930 055

## Beschreibung

Schlechte Sicht bei Nacht ist eine anstrengende und gefährliche Situation, die von vielen Fahrern gefürchtet wird. Als Folge der schlechten Sicht ist die Unfallhäufigkeit nachts deutlich höher verglichen mit Fahrten bei Tag und guter Sicht. Bei Benutzung des Abblendlichtes auf Grund von Gegenverkehr resultiert in einer geringen Sichtweite, welche von vielen Fahrern falsch eingeschätzt wird. Das führt zu einem späten Erkennen von unbeleuchteten Hindernissen, Fußgängern, Radfahrern ohne Licht und von Tieren und damit zu Unfällen. Zudem wird der Fahrer durch die Scheinwerfer entgegenkommender Fahrzeuge und deren Reflexe vor allem bei nasser Fahrbahn geblendet; d.h.: der Fahrer fährt kurzzeitig in ein schwarzes Loch. Besonders gefährdet sind hierbei nachtblinde und ältere Fahrer wegen ihrer geringeren Sehleistung. Des weiteren verschlechtern Regen, Nebel und Schneetreiben die Sichtverhältnisse nochmals deutlich.

Eine Verbesserung der Sicht bei Nacht wird durch ein optoelektronisches System erreicht, wie es beispielsweise in der Offenlegungsschrift P 40 07 646.6 dargelegt ist. Das vorveröffentliche Dokument GB-A-302 656 ist als relevanter Stand der Technik zu betrachten.

Das System nimmt ein Videobild einer Szene auf und stellt es dem Fahrer in geeigneter Weise dar. Das dargestellte Bild zeigt dazu wesentlich mehr als der Fahrer mit seinen Augen durch die Scheibe direkt sehen kann. Hierbei enthält das System zusätzlich zu den normalen Scheinwerfern zwei "Laserscheinwerfer", die im nahen Infrarot emittierende Laserdioden als Lichtquelle nutzen. Da das infrarote Licht für das menschliche Auge nahezu nicht sichtbar ist, kann sodann permanent "aufgeblendet" beleuchtet werden. Nachteilig wirkt sich hierbei jedoch der zusätzlich zu den normalen Scheinwerfern notwendige Platzbedarf für die Laserscheinwerfer aus.

Die Aufgabe der Erfindung ist es, eine Einrichtung zur Fahrzeugbeleuchtung zu finden, welcher einen geringen Platzbedarf auf weist.

Die Aufgabe wird durch eine Einrichtung zur Fahrzeugbeleuchtung gelöst, bei welchem der zur Beleuchtung dienende Lichtstrahl über ein Umlenkprisma und einen Reflektor umgelenkt ausgestrahlt wird.

In erfinderischer Weise ist es dabei denkbar die Einrichtung so zu gestalten, dass der Reflektor den Lichtstrahl in eine Richtung ausstrahlt, welche um einen Bereich von 90 Grad bezüglich der Einstrahlrichtung des Lichtstrahls in das Umlenkprisma gedreht ist. Auf diese Weise ist es möglich die Lichtquelle, bzw. die Einspeisung des Lichtstrahls direkt hinter dem Reflektor anzuordnen und hierdurch über einen gefalteten Strahlengang in der Beleuchtungseinrichtung eine flache, platzsparende Struktur zu schaffen. In vorteilhafter Weise ist kann der Lichtstrahl über einen Lichtleiter in die Einrichtung eingespeist werden, andererseits ist es aber auch denkbar den Lichtstrahl mittels einer in der Einrichtung selbst enthaltenen Laserlichtquelle zu erzeugen. Die Verwendung eines Lasers als Lichtquelle birgt den Vorteil einer schmalbandigen Ausleuchtung, wodurch sich die in der erfindungsgemäßen Beleuchtungseinrichtung enthaltenen optischen Elemente besonders exakt, dem gewünschten Strahlengang angepaßt dimensionieren lassen.

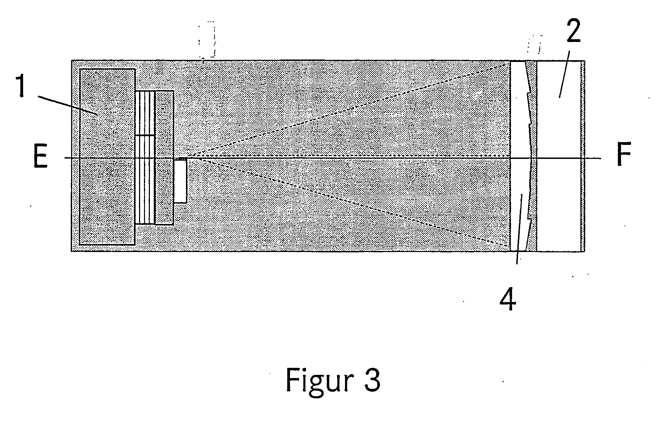

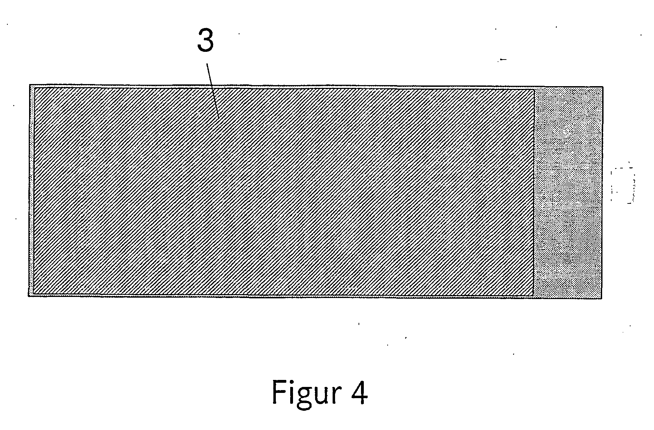

Nachfolgend wird die Erfindung beispielhaft anhand von Figuren 1-5 und einem vorteilhaften Ausführungsbeispiel, bei welchem ein Laser als Laserquelle benutzt wird, näher erläutert.
**Figur 1** zeigt die Draufsicht auf einen erfindungsgemäßen Laserscheinwerfer (Schnitt durch die Ebene E - F nach Figur 2).
**Figur 2** zeigt die Draufsicht eines zu Figur 1 alternativen erfindungsgemäßen Laserscheinwerfer (Schnitt durch die Ebene E - F nach Figur 2).
**Figur 3** zeigt die Rückansicht eines Laserscheinwerfers nach Figur 1 oder 2 (Schnitt durch die Ebene A-B nach Figur 1).
**Figur 4** zeigt beispielhaft die Vorderansicht eines Laserscheinwerfers nach Figur 1 oder 2 (Schnitt durch die Ebene A-B nach Figur 1).
**Figur 5** zeigt eine stark vergrößerte Skizze einer vorteilhaften Reflektorfläche des Bauteils 3 (Reflektor/Diffuser)
**Figur 6** zeigt eine stark vergrößerte Skizze einer zu Figur 5 alternativen vorteilhaften Reflektorfläche des Bauteils 3 (Reflektor/Diffuser)

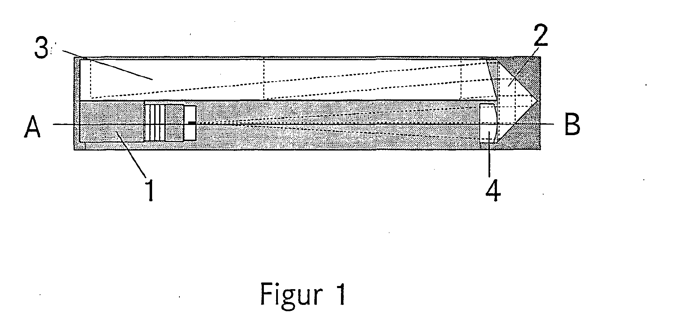

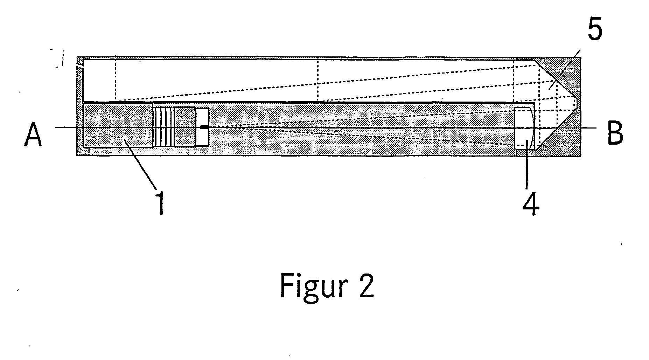

Aus **Figur 1** und **Figur 2** wird ersichtlich, dass der erfindungsgemäße Scheinwerfer extrem flach gestaltet werden kann.

In **Figur 1** ist der Reflektor/Diffuser **3** und das Umlenkprisma **2** jeweils als ein separates Bauteil ausgeführt. Die Laserdiode **1** sitzt auf einem Kühlkörper an der Rückseite des Scheinwerfers und sendet das Licht in Richtung der Linse **4** aus. Durch diese Linse **4** gelangt das Licht sodann in ein Umlenkprisma **2**. Von dort aus gelangt das Licht in den Reflektor/Diffuser **3**, über welchen es sodann ausgestrahlt wird.

Die in **Figur 2** dargestellte Ausführungsform der erfindungsgemäßen Vorrichtung entspricht im Wesentlich der in Figur 1 dargestellten Vorrichtung, jedoch sind hier der Diffusor **3** und des Umlenkprisma **2** aus einem gemeinsamen Teil **5** gefertigt.

Nach dem Aussenden weitet das Licht der Laserdiode **1** weitet durch Beugung auf. Zur Verdeutlichung sind die von der Laserdiode ausgehenden Lichtstrahlen in Figur 1 und 2 gestrichelt eingezeichnet. Hierbei ist es denkbar, dass bei einem Einsatz einer Laserdiode in Form einer Fabry-Perot Diode, die Lichtstrahlen in einer Richtung nur um einen kleinen Winkel von + 5° aufweiten (Figur1), während sie in der anderen Richtung um einen Winkel von + 20° aufweiten (Figur 2). In vorteilhafter weise ist der als Lichtquelle verwendete Laser **1** dergestalt zu dimensionieren, daß der ausgesandte Lichtstrahl auf dem Weg zur Linse **4** so aufgeweitet wird, dass die Oberfläche der Linse **4** optimal ausgeleuchtet wird. Hierbei können als Lichtquellen auch in gewinnbringender weise oberflächen-emittierende Laserdioden sinngemäß eingesetzt werden. Da diese Laserdioden eine symmetrische Lichtemission aufweisen, sind vorteilhafterweise die Abmessungen des Scheinwerfers der Diodenfläche anzupassen, beziehungsweise ist es auch denkbar um die Strahlungsfläche zu vergrößern, mehrere Laserdioden nebeneinander zu betreiben.

Laserdioden emittieren das Licht aus einer sehr kleinen Fläche von 1 µm bis 200 µm, der Lichtfleck kann also als punktförmig angesehen werden. Die Laserdiode ist im Brennpunkt einer Plankonvexlinse **4** angebracht, die das divergierende Lichtbündel kollimiert. Die Linse kann dabei beispielsweise eine einfache Linse, eine Fresnel-Linse oder ein Achromat sein.

Ein Umlenkprisma **2** lenkt das Lichtbündel um etwa 180° um und speist es in eine Platte **4** ein, deren innen liegende Seite als Reflektor und deren äußere Seite als Diffuser ausgebildet ist.

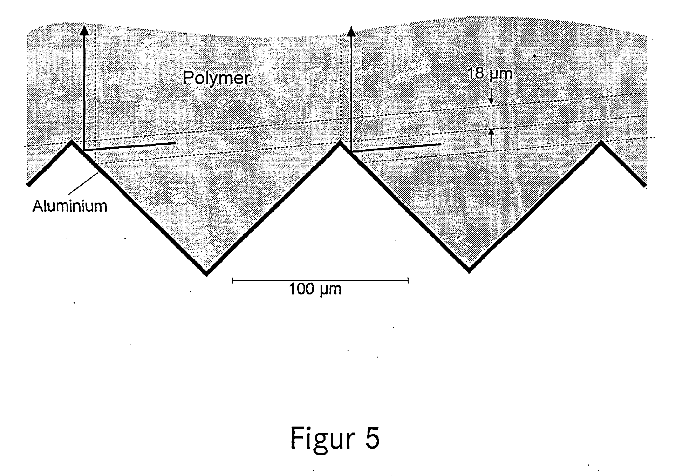

Eine mögliche Ausführungsform des Reflektors ist in **Figur 5** skizziert. In dieser Skizze trifft das Licht nach der Reflexion senkrecht auf die oberhalb der geriffelten, sägezahnartigen Struktur des Reflektors befindlichen Oberfläche des Diffusors. Dies ist nicht notwendig, durch eine entsprechende Form des Reflektors kann das Licht auch unter einem anderen Winkel auftreffen. Eine vorzugsweise Richtung ist parallel zur Achse des Fahrzeugs, zur besseren Ausleuchtung von Kurven sind auch andere Richtungen sinnvoll. Das von links aus dem Umlenkprisma **2** ankommende Licht wird an einer sägezahnartigen Mikrostruktur des Reflektors **3** reflektiert. Hieraus ergibt sich sodann eine Maximierung der ausgeleuchteten Oberfläche der Struktur. Die Ausleuchtung der Oberfläche der Struktur ist in **Figur 5** skizziert. Die Mikrostruktur kann durch Abformen hergestellt werden. Zeitliche und räumliche Kohärenz bei der Verwendung von Laserdioden als Lichtquelle sind so gering, daß hierbei keine störenden Interferenzeffekte auftreten.

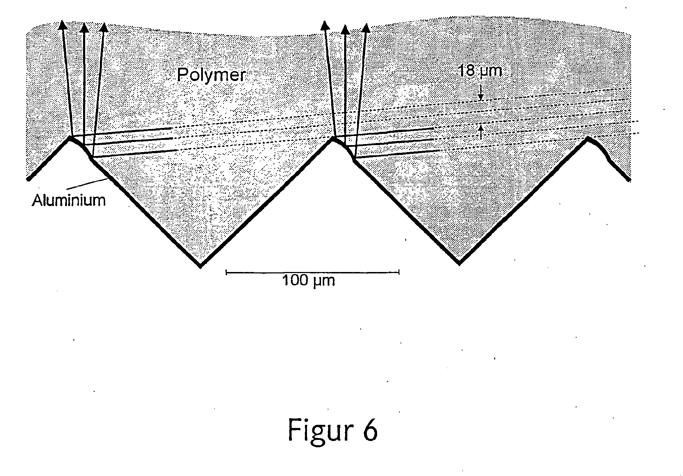

Als Diffuser kann entweder ein holographischer Diffuser ausgeführt werden, es ist aber in gewinnbringender Weise auch denkbar, den Diffuser in die Struktur des Reflektors zu integrieren wobei wie aus **Figur 6** ersichtlich die geriffelte, sägezahnartige Struktur des Reflektors mit Mikrolinsen oder Mikrokeilen verwendet werden und auf diese Weise. Der Diffuser formt aus dem ankommenden kollimierten Lichtbündel die gewünschte Scheinwerferverteilung. Es ist dabei in besonders erfinderischer Weise denkbar, den Reflektor bzw. den Diffusor so auszuführen, daß er mehrere Zonen unterschiedlicher Reflektivitäts- bzw. Diffusionseigenschaften aufweist. Dabei ist es gewinnbringend wenn die Einrichtung dergestalt ausgebildet ist, dass der Lichtstrahl so gelenkt werden kann, daß nur bestimmte Zonen der Linse **4**, und somit nur bestimmte Zonen des Reflektors **3** ausgeleuchtet werden.

Die erfindungsgemäße Einrichtung zur Fahrzeugbeleuchtung ist selbstverständlich nicht auf den mobilen Einsatz in Fahrzeugen beschränkt, sondern kann auch gewinnbringend stationär, insbesondere in oder an Gebäuden, eingesetzt werden. So kann die Einrichtung beispielsweise zur als besonders flach aufbauende Hinterleuchtung von Werbeanzeigen oder sonstigen graphischen Darstellungen dienen. Es ist gleichwohl auch denkbar in vorzüglicher Weise erfinderische Einrichtung als integrierbare Beleuchtung in relativ dünne Medien (wie beispielsweise Zimmerwände) Flach zu verwenden (z.B.: als Lichtwand oder Beleuchtung von Schrankinnenräumen oder Kühlschränken).

## Patentansprüche

1. Einrichtung zur Fahrzeugbeleuchtung,
wobei der von einer Lichtquelle. (1) mit einer bevorzugten Einstrahlrichtung eingestrahlte, zur Beleuchtung dienende Lichtstrahl über ein Umlenkprisma (2) um etwa 180° umgelenkt wird,
**dadurch gekennzeichnet, dass**
der Lichtstrahl über einen Reflektor (3) umgelenkt und im wesentlichen quer zur Einstrahlrichtung ausgestrahlt wird.

2. Einrichtung nach Anspruch 1, **dadurch gekennzeichnet, dass** der Reflektor (3) den Lichtstrahl in eine Richtung ausstrahlt, welche um einen Bereich von 90 Grad bezüglich der Einstrahlrichtung des Lichtstrahls in das Umlenkprisma (2) gedreht ist.

3. Einrichtung nach einem der Ansprüche 1 oder 2, **dadurch gekennzeichnet, dass** der Lichtstrahl mittels einer in der Einrichtung selbst enthaltenen Laserlichtquelle (1) erzeugt wird.

4. Einrichtung nach Anspruch 3, **dadurch gekennzeichnet, dass** die Laserlichtquelle (1) in Form einer Fabry-Perot Diode ausgeführt ist.

5. Einrichtung nach Anspruch 3, **dadurch gekennzeichnet, dass** die Laserlichtquelle (1) in Form einer oberflächen-emittierenden Laserdiode ausgeführt ist.

6. Einrichtung nach Anspruch 5, **dadurch gekennzeichnet, dass** zur Vergrößerung der Strahlungsfläche mehrere oberflächen-emittierenden Laserdioden (1) parallel betrieben werden.

7. Einrichtung nach einem der Ansprüche 1 oder 2, **dadurch gekennzeichnet, dass** der Lichtstrahl über einen Lichtleiter in die Einrichtung eingespeist wird.

8. Einrichtung nach einem der Ansprüche 1 bis 7, **dadurch gekennzeichnet, dass** der Lichtstrahl über eine Linse (4) in das Umlenkprisma (2) eingespeist wird.

9. Einrichtung nach Anspruch 9, **dadurch gekennzeichnet, dass** die Linse (4) und das Umlenkprisma (2) aus einem Stück gefertigt werden.

10. Einrichtung nach einem der Ansprüche 1 bis 9, **dadurch gekennzeichnet, dass** der Lichtstrahl so gelenkt werden kann, dass nur bestimmte Zonen der Linse, und somit nur bestimmte Zonen des Reflektors (3) ausgeleuchtet werden.

11. Einrichtung nach einem der Ansprüche 1 bis 10, **dadurch gekennzeichnet, dass** der Reflektor (3) zur gezielten Lenkung des Lichtstrahls eine geriffelte, sägezahnartige Mikrostruktur aufweist.

12. Einrichtung nach Anspruch 11, **dadurch gekennzeichnet, dass** die Oberfläche des Reflektors (3) so ausgeführt ist, dass sie gleichzeitig als Diffusor wirkt,
wobei die einzelnen vom Lichtstrahl beleuchteten Abschnitte der geriffelten, sägezahnartigen Mikrostruktur des Reflektors (3) als Mikrolinsen oder Mikrokeile ausgeführt werden.

13. Einrichtung nach einem der Ansprüche 11 oder 12, **dadurch gekennzeichnet, dass** der Reflektor (3) mehrere Zonen mit unterschiedlichen Reflektivitätseigenschaften aufweist.

## Claims

1. Device for vehicle illumination, in which the light beam, which is radiated in by a light source (1) with a preferred irradiation direction and serves for illumination, is deflected by approximately 180° via a deflection prism (2), **characterized in that** the light beam is deflected via a reflector (3) and is emitted substantially transversely to the irradiation direction.

2. Device according to Claim 1, **characterized in that** the reflector (3) emits the light beam in a direction which is rotated through a range of 90 degrees with respect to the irradiation direction of the light beam into the deflection prism (2).

3. Device according to either of Claims 1 and 2, **characterized in that** the light beam is produced by means of a laser light source (1) contained in the device itself.

4. Device according to Claim 3, **characterized in that** the laser light source (1) is designed in the form of a Fabry-Perot diode.

5. Device according to Claim 3, **characterized in that** the laser light source (1) is designed in the form of a surface-emitting laser diode.

6. Device according to Claim 5, **characterized in that** a plurality of surface-emitting laser diodes (1) are operated in parallel in order to increase the radiation area.

7. Device according to either of Claims 1 and 2, **characterized in that** the light beam is fed into the device via a light guide.

8. Device according to one of Claims 1 to 7, **characterized in that** the light beam is fed into the deflection prism (2) via a lens (4).

9. Device according to Claim 8, **characterized in that** the lens (4) and the deflection prism (2) are fabricated from one piece.

10. Device according to one of Claims 1 to 9, **characterized in that** the light beam can be directed such that only specific zones of the lens, and thus only specific zones of the reflector (3), can be illuminated.

11. Device according to one of Claims 1 to 10, **characterized in that** the reflector (3) has a grooved, sawtooth-type microstructure for the targeted direction of the light beam.

12. Device according to Claim 11, **characterized in that** the surface of the reflector (3) is designed such that it simultaneously acts as a diffusor, wherein the individual sections, illuminated by the light beam, of the grooved, sawtooth-type microstructure of the reflector (3) are designed as microlenses or microwedges.

13. Device according to either of Claims 11 and 12, **characterized in that** the reflector (3) has a plurality of zones with different reflectivity characteristics.

## Revendications

1. Dispositif destiné à l'éclairage de véhicules, le rayon lumineux servant à l'éclairage émis par une source lumineuse (1) dans un sens d'incidence préféré étant dévié de l'ordre de 180° par l'intermédiaire d'un prisme déviateur (2), **caractérisé en ce que** le rayon lumineux est dévié par l'intermédiaire d'un réflecteur (3) et diffusé de façon substantiellement perpendiculaire au sens d'incidence.

2. Dispositif selon la revendication 1, **caractérisé en ce que** le réflecteur (3) diffuse le rayon lumineux dans une direction tournée de l'ordre de 90 degrés par rapport au sens d'incidence du rayon lumineux dans le prisme déviateur (2).

3. Dispositif selon la revendication 1 ou 2, **caractérisé en ce que** le rayon lumineux est généré au moyen d'une source de lumière laser (1) renfermée elle-même dans le dispositif.

4. Dispositif selon la revendication 3, **caractérisé en ce que** la source de lumière laser (1) est conformée en tant que diode Pérot-Fabry.

5. Dispositif selon la revendication 3, **caractérisé en ce que** la source de lumière laser (1) est conformée en tant que diode laser émettant en surface.

6. Dispositif selon la revendication 5, **caractérisé en ce que** plusieurs diodes laser (1) émettant en surface sont utilisées en parallèle afin d'augmenter la surface de rayonnement.

7. Dispositif selon la revendication 1 ou 2, **caractérisé en ce que** le rayon lumineux est injecté dans le dispositif par l'intermédiaire d'un guide de lumière.

8. Dispositif selon l'une quelconque des revendications 1 à 7, **caractérisé en ce que** le rayon lumineux est injecté dans le prisme déviateur (2) par l'intermédiaire d'une lentille (4).

9. Dispositif selon la revendication 8, **caractérisé en ce que** la lentille (4) et le prisme déviateur (2) sont fabriqués d'une seule pièce.

10. Dispositif selon l'une quelconque des revendications 1 à 9, **caractérisé en ce que** le rayon lumineux peut être dévié de telle sorte que seulement des zones déterminées de la lentille et dès lors seulement des zones déterminées du réflecteur (3) sont éclairées.

11. Dispositif selon l'une quelconque des revendications 1 à 10, **caractérisé en ce que** le réflecteur (3) présente une microstructure striée en dents de scie afin de dévier le rayon lumineux de façon appropriée.

12. Dispositif selon la revendication 11, **caractérisé en ce que** la surface du réflecteur (3) est conformée de telle sorte qu'elle agisse en même temps en tant que diffuseur, les segments individuels de la microstructure striée en dents de scie du réflecteur (3) éclairés par le rayon lumineux étant conformés en tant que microlentilles ou en tant que microcoins.

13. Dispositif selon la revendication 11 ou 12, **caractérisé en ce que** le réflecteur (3) présente plusieurs zones avec des propriétés de réflexion différentes.
